# EUROPEAN PATENT APPLICATION

(11) **EP 3 705 401 A1**
(43) Date of publication of application: **09.09.2020**
(21) Application number: 18874847.9
(22) Date of filing: 30.10.2018
(51) Int. Cl.: B64C 39/06, B64C 39/08, B64D 27/02, B64C 3/16, B64C 5/02, B64C 3/40, B64C 3/38, B64C 29/00

(54) **ASSEMBLY OF THREE COMPOSITE WINGS FOR AERIAL, WATER, LAND OR SPACE VEHICLES**

(30) Priority: 02.11.2017 ES 201731283
(71) Applicant: Manterola Ottonello, Carlos Cesar, 28802 Alcala De Henares (ES)
(72) Inventor: Manterola Ottonello, Carlos Cesar, 28802 Alcala De Henares (ES)
(74) Representative: Isern Patentes y Marcas S.L.
(86) International application number: PCT/ES2018/070704
(87) International publication number: WO 2019/086742

(57) **Abstract**

The present invention relates to an assembly of three wings joined with or without marginal plates, for aerial, water, land or space vehicles, to reduce induced drag and interference drag and provide greater manoeuvrability, independence in the fuselage design, optional installation of propulsion plant systems, an optional system of landing gears, increased maximum speed and reduced minimum speed, it being possible to reach zero speed or hover. The assembly also allows flight forwards, backwards, sideways, upwards and downwards or rotations about the axes of the vehicle.

## Description

### Field of the invention

The invention relates to an assembly of three composite wings for aerial, water, land or space vehicles.

### Background of the invention

Within the field of the invention there is the Argentine patent AR247163 "ASSEMBLY OF COMPOSITE WINGS FOR AIRCRAFT", of the same inventor as the present one, wherein it shows one of the front wings, which are those found in the lower and front position of the fuselage or fuselages, moving backwards and upwards, joining in the external area thereof with the other two wings; the central wings are the ones found in the upper and central area of the fuselage or fuselages, joining in the external area thereof with the other two wings; the rear wings are the ones found with the upper and rear position of the rudder-fuselage(s), moving forwards and downwards, joining in the external area with the other two wings. Therefore, in this patent the 3 wings are always located in three different planes and in three different positions. The joining of the wings at the respective wingtips thereof is through the marginal plates.

### Description of the invention

The present invention relates to an assembly of three wings joined with or without marginal plates, for aerial/water/land or space vehicles, to reduce induced drag and interference drag and provide greater manoeuvrability, independence in the fuselage design, optional installation of propulsion plant systems, an optional system of landing gears, increased maximum speed and reduced minimum speed, it being possible to reach zero speed or hover. The assembly also allows flight forwards, backwards, sideways, upwards and downwards or rotations about the axes of the vehicle.

The invention of an assembly of wings joined with or without marginal plates can be applied to different types of vehicles such as aerial vehicles, such as an aircraft, unmanned aircraft, model, drones, model airplanes, etc.; helicopters, etc.; water vehicles such as amphibious aircraft, amphibious helicopters, etc.; land vehicles such as a car-plane, motorcycle-plane, etc. or space vehicles such as ships, shuttles, etc.; for transport tasks, such as cargo, passengers, equipment, etc.; jobs such as fumigation, surveillance; being able to be manned, unmanned or autonomous, etc.; it has three wings.

Therefore, the invention describes an assembly of three composite wings for aerial, water, land or space vehicles that is formed by:
- front composite wings,
- central composite wings and
- rear composite wings,
wherein said front composite wings are located in the lower and front position of the fuselage or fuselages of the vehicle, moving backwards and upwards,
wherein said front composite wings are joined in the external area thereof with said central composite wings and said rear composite wings,
wherein said front composite wings are swept and have a positive dihedral and are formed with power plants (1) therein, tilting planes (2), elevators-ailerons and high-lift devices (3), in order to join said central and rear composite wings,
wherein said central composite wings are located in the upper area of the fuselage or fuselages of said vehicle,
wherein said central composite wings are joined in the external area thereof with said rear composite wings and said front composite wings,
wherein said central composite wings are swept and have a dihedral and are formed with power plants (11) therein, tilting planes (12), elevators-ailerons and high-lift devices (4), and wingtips (5),
wherein said rear wings are located in the upper and rear position of the fuselage-rudder or fuselages-rudders of said vehicle, moving forwards and downwards,
wherein said rear wings are joined in the external area thereof with said front wings and said central composite wings,
wherein said swept rear composite wings with a negative dihedral are formed with a system of power plants (6) therein and in the joint with the rudder or rudders (7), tilting planes (8), elevators-ailerons and high-lift devices (9), in order to be joined with the central and rear composite wings.

As seen, unlike the existing solutions, with the present invention, through different specific configurations, improvements or advantages can be achieved in aerial, water, land or space vehicles such as:
- Increasing the structural rigidity through the joint of the wings themselves without plates, or with the elliptical/circular shape thereof, leading to a reduction in the weight of the vehicle and therefore more range or less energy for the same range.
- Increasing aerodynamic cleanliness through the joint of the wings themselves without plates, or with the elliptical/circular shape thereof, i.e. more range or less energy for the same range. Improvement in the aerodynamic performance with the variation of the tapering and elongation. To be able to achieve design configurations for different types of flight with the variation of the elongation and/or tapering of the three composite wings.
- Improved stability at low and high speeds with the variation of the sweeping of the central wing. As well as the increase and reduction of the high and low speeds with the variation of the sweeping of the central wing. Furthermore, to be able to improve stability with the variation of the dihedral of the central wing.
- By increasing the lift forces of the central and rear wings, a significant variation of the CG of the vehicle can be obtained.
- By placing a power plant system in the joint of the rudder(s) and the rear wings, the aerodynamic cleaning is improved, which causes it to have more range or less energy for the same range.
- Being able to install the power plant in the wings in addition to the fuselage enables us to perform manoeuvres such as: vertical take-off and landing; movement forwards and backwards with positive/negative angle of the "fuselage", with positive/negative banking, left/right rudder; rotate on the 360° axis thereof to the left or right with a positive/negative angle of the "fuselage", with positive/negative banking; lateral movement with positive/negative angle of the "fuselage", with positive/negative banking, left/right rudder. These manoeuvres and combinations thereof. In other words, manoeuvres that other designs cannot perform.
- Being able to have the wing surface increased, maintaining the structural rigidity, enables us to install a solar charging system to power the electrical system (batteries, engines, etc.)
- To be able to build with different types of materials optimising the weight given the structural rigidity of the design.
- Considering that the wings themselves are a self-supporting structure, this achieves the independence of what is to be installed as an aerial, terrestrial, aquatic or space transportation system for carrying cargo (passengers, equipment, etc.).
- According to the versatility in the movements that the design enables, different types of landing gears or similar can be installed.

These and other advantages are apparent in light of the detailed description of the invention.

### Brief description of the drawings

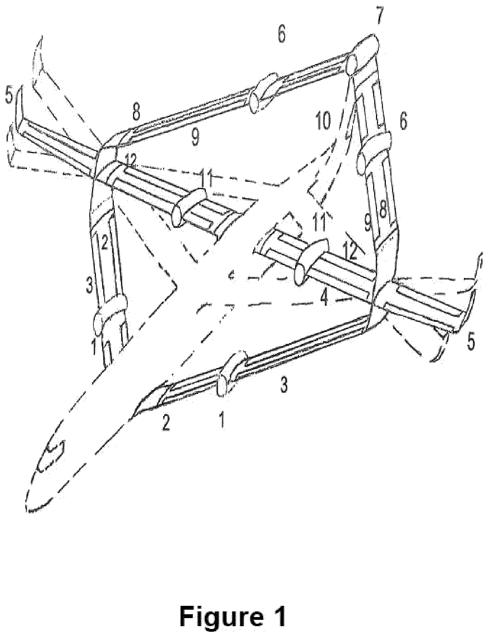

Figure 1 shows a representative view of the configurations which can be achieved with the present invention.

### Detailed description of the invention

The elements defined in this detailed description are provided to help create an overall understanding of the invention. Accordingly, those skilled in the art will recognise that variations and modifications of the embodiments described herein can be made without departing from the scope and spirit of the invention. In addition, the detailed description of sufficiently known functions and elements are omitted for reasons of clarity and conciseness.

The invention relates to a system formed by three joined wings, with power plant therein and in the rudder(s), tilting planes, lift elements and without marginal plates which is formed in the following manner:

The swept front wings with a positive dihedral formed with: power plants (1) therein, tilting planes (2), elevators-ailerons and high-lift devices (3), and the wingtips thereof curving to be joined with the central wings. In the swept central wings with tilting planes and a dihedral formed with: elevators-ailerons and high-lift devices (4), and wingtips (5). In the swept rear wings with a negative dihedral formed with: power plant system (6) therein and in the joint with the rudder(s) (7), tilting planes (8), elevators-ailerons and high-lift devices (9), and the wingtips thereof curving to be joined with the central wings. The fuselage-rudder is joined with the same wings (10).

Different embodiments for the invention are described below.

In one embodiment, the three groups of composite wings (front, central and rear) are joined together without marginal plates, using the curvature or lack of curvature of the wingtips thereof in the case of the front and rear composite wings in order to be joined with the central composite wings; and wherein the three groups of composite wings (front, central and rear) can vary or not in the tapering and/or elongation thereof.

The joint using the same curvatures of front and rear composite wings enables the aerodynamic interference drag to be reduced without plates, i.e. reduction in consumption of thrust energy. Furthermore, the fluxes of structural stresses are reduced by shrinking the concentration point of stresses and distributing them over the same contact surfaces, i.e. reduction in weight and consequential reduction in thrust energy.

Moreover, by being able to make a change in the relationship between the root and tip chords of each wing plane, the induced drag is reduced, i.e. reduction in consumption of thrust energy. Likewise, if the wingspan of each wing plane is increased, the induced drag is reduced, i.e. reduction in consumption of thrust energy.

In another embodiment, one of the possible configurations without marginal plates is that the front and rear composite wings have elliptical and/or circular shapes in the joints, in an elevation view.

The front and rear composite wings form an ellipse or circle and in the central composite wings joined thereto, it enables on the one hand the reduction in the induced drag, i.e. reduction in consumption of thrust energy; on the other hand, a reduction in the structural stresses which leads to a reduction in weight and consequentially a reduction in the thrust energy.

In another embodiment, one of the possible configurations with or without marginal plates is the one wherein, in the central composite wings, high-lift elements can be added in the edge, i.e. that the left high-lift device is found in the left central wing and the right high-lift device is found in the right central wing.

By installing said high-lift elements in the central composite wings, it increases the lift of said wings and with it reduces the take-off and landing speed, and consequential reduction in the runway length.

In another embodiment, one of the possible configurations with or without marginal plates is the one wherein, in the rear composite wings, high-lift elements can be installed in the leading edge, i.e. that the left high-lift device is found in the left rear wing and the right high-lift device is found in the right rear wing.

Likewise, as occurs with the central composite wings, by installing the high-lift elements in the rear wings, it also increases the lift of said wings and with it reduces the take-off and landing speed, and consequential reduction in the runway length.

In another embodiment, one of the possible configurations with or without marginal plates is the one wherein the wingspan of the central wing is larger than the wingspan of the other two wings, either in a fixed manner, i.e. in the design, or in such a manner that they can disassemble and assemble an extension prior to the operation of the vehicle in a dynamic manner.

In the case of said expansion of the fixed or mobile wingspan, it can be carried out in one of the following manners:
- Wingtips (winglets, plates, etc.) may or may not be installed on the tips of the extended wings.
- High-lift elements may or may not be installed on the extended wings on the leading edges thereof.
- Elevator-aileron elements may or may not be installed on the extended wings on the trailing edges thereof.

Having a larger wingspan in the central composite wings, i.e. that the central wings "extend" in the wingspan thereof beyond the joint with the other two wings (front and rear) and considering that the other two wings become, apart from wings, wing-supports for the central composite wings, such that the wingspan of the central wings can be increased and the wing loading can be decreased with the reduction in the induced drag. In the event that the extensions can be disassembled prior to the operation of the vehicle, it enables two types of vehicles to be had with just one: one with a high wing loading (for example, an aerobatic aircraft) and the other with a low wing loading (for example, a sailplane).

In the case that said extension is mobile, i.e. that the wingspan can be extended and/or retracted during the operation of the vehicle.

In this case, it is an improvement to be able to extend the central composite wings during the operation since it would enable, if desired, taking off with the central composite wings retracted and consequentially with low parasitic drag during the operation; such that gaining height and extending the central wings increases the parasitic drag in a small proportion, but significantly reduces the induced drag (which predominates at high altitudes due to low air density). As an example, this situation is useful in order to have an aerobatic aircraft at take-off and a sailplane at altitude.

The following three implementation options for the mobile extension are proposed:
- Wingtips (winglets, plates, etc.) may or may not be installed on the tips of the extended wings.
- High-lift elements may or may not be installed on the extended wings on the leading edges thereof.
- Elevator-aileron elements may or may not be installed on the extended wings on the trailing edges thereof.

Putting wingtips on the extensions of the central composite wings achieves a reduction in the induced drag, and in the case of installing winglets as wingtips, further collaborates in the forward thrust.

Meanwhile, by having elevators-ailerons on the trailing edges thereof, it is possible to obtain more lift and further increase manoeuvrability with a minimum deflection of the ailerons and consequential reduction in drag. Likewise, extending the central composite wings beyond the joint with the other two wings and being able to install high-lift elements on the leading edges in the central extension wings increases the lift of the wing assembly and with it reduces the take-off and landing speed, and consequential reduction in the runway length, apart from the decrease in the induced drag.

In another relationship, one of the possible configurations with or without marginal plates is that which, in the central composite wings, the sweeping thereof can be varied, i.e. that it is backward-swept and/or forward-swept, with the following implementation options:
- Fixed, i.e. in the design, or being adjustable prior to the operation of the vehicle.
   Being able to change the sweeping, such as the backward-swept position, enables a higher maximum speed to be acquired by moving the shock wave away. In the case of forward sweeping, it enables the loss to be reduced by enabling being able to operate at low speeds, or in other words, improving the stability at low speeds. This is more feasible in this design since the wingtips are secured with the joint of the front and rear wings, which nullifies the divergent effect of being forward-swept; likewise, in the case that the central wings have a larger wingspan than the front and rear wings, it enables a large portion of the forward-swept central wings, as it is secured with the joint of the front and rear wings, to not have a divergent effect and in the extension portion of the central wings, said divergent effect can be controlled. There can also be the design wherein the internal portion of the central wings is forward-swept and the extensions are backward-swept, which enables maximum speed.
- Mobile, i.e. that the sweeping thereof may vary being forward-swept and/or backward-swept, or vice versa, passing through a sweeping of "0" during the operation of the vehicle. This movement will be carried out as the central wings (right and left) move at the root (fuselage) of the wings and the axis of rotation thereof is the joint of the three wings.
   Being able to be backward-swept and forward-swept has been detailed in the previous point; therefore here it highlights the fact that the sweeping of the central wings can be moved forwards and backwards, considering that they move at the root thereof within the fuselage and rotate on the axis thereof at the joint with the central and rear wings during the operation of the vehicle, which will enable it to have maximum speeds, control low speed and lower the minimum speeds with a reduction in the induced drag.

In another embodiment, one of the possible configurations with or without marginal plates is that where, in the central composite wings, the dihedral can be varied so it is positive, zero and/or negative, fixed as envisaged in the design.

Therefore, the positive and negative dihedrals are improvements which enable better control at low and high speeds.

Another embodiment has a power plant or power plants in the joint of the rudder(s) and rear wing or of the rudders and rear wings (more than one rudder or more than one "fuselage-rudder", normal rudder, V-tail, etc.).

If a thrust/power plant system is to be had, the location in the joint of rear composite wings with rudder or rudders enables thrust and an aerodynamically clean vehicle to be had. Furthermore, as the power plant system is secured in three structural areas (rudder/rudders, left rear wing and right rear wing) and in turn these structures are part of the joined structural system, it enables stresses to be reduced and consequentially the weight and thrust energy.

In another embodiment, one of the possible configurations with or without marginal plates is to install a power plant system in one or more of the composite wings with one of these three options or a combination thereof:
- Power plants may or may not be installed in the front composite wings, but the same power plants may be fixed, and/or tilting. In the case that they are tilting, they either tilt on the same plane of the wing containing it, or they tilt with the same wing plane or portion of the wing plane containing it.
- Power plants may or may not be installed in the central composite wings, but the same power plants may be fixed, and/or tilting. If they are tilting, they either tilt on the same plane of the wing containing it, or they tilt with the same wing plane or portion of the plane containing it. Likewise, in the case of the variation of the sweeping, being able to rotate or not in order to be oriented according to the flight direction.
- A power plant may or may not be installed in the central composite wings, but the same power plant may be fixed, and/or tilting. If they are tilting, they either tilt on the same plane of the wing containing it, or they tilt with the same wing plane or portion of the plane containing it.

Said power plant system may be installed in the front, central, rear composite wings or combinations thereof.

Placing a fixed power plant system in the front, central and rear composite wings enables there to be forward thrust, as well as controlling or compensating for the rotation to the CG of the vehicle.

Placing a power plant system in the front, central and rear mobile tilted composite wings enables there to be thrust forwards, backwards and sideways, upwards and downwards, rotating on the axes thereof; i.e. in all directions and with the behaviour of the fuselage indistinctly to them. Further highlighting that when it is aligned with the predominant flight direction, maximum speed can be achieved. It is a combination of an aircraft and helicopter, but with more manoeuvres than a helicopter and the same speeds as an aircraft at the same time.

With a mobile system tilting the plane containing the same power plant system, the same improvements as those listed in the previous paragraph (mobile tilting the same power plant system) are achieved, but here a better energy efficiency is enabled given that the planes, when moving with the power plant system, enable the interference and drags of the planes with the advance movement of the vehicle towards where it is desired to be reduced.

Moreover, when a power plant system is expressed, it can be defined as a thrust system, such as, for example, in a non-limiting manner: turbo jet, turboprops, propellers, thrust nozzles, orientable or not, scramjet, ramjet, rocket engine, electric engine, fuel engine, etc.

In another embodiment, one of the possible configurations with or without marginal plates is installing elements which enable solar rays to be used as energy, such as solar panels or other elements, indistinctly on the wing surfaces.

The fact that it is able to have large wing surfaces (front, rear and central with the extensions thereof) maintaining joined structural rigidity and low wing loading, enables it to have a solar energy system for the vehicle.

In another embodiment, one of the possible configurations with or without marginal plates is constructing the design with aeronautical, water, land or space materials; such as, for example, and in a non-limiting manner: aluminium, steel, wood, composite materials, graphene, etc.

The fact that the structure of the joint of the three composite wings and the fuselage enables the torsional stresses to be substantially reduced, but also the bending stresses, which means that almost any type of material can be used.

In another embodiment, one of the possible configurations in the fuselage or supporting structure is being able to install or not install a rear cargo door, being able to have larger doors and windows, as well as being able to remove and install the fuselage-container or passenger cabin in a quick manner, structure like a land vehicle (shape of a car, motorcycle, etc.) attached to the self-supporting structure of the three wings.

In another embodiment, one of the possible configurations is being able to install or not install, both in the wing group and/or in the fuselage or fuselages: landing gears (conventional, tricycle, bicycle, quadricycle, etc.), and/or legs, and/or skates-skis, and/or floats, and/or supports, etc.

The fact that the structure of the joint of the three wings and the fuselage enables torsional stresses to be substantially reduced enables the size of the doors and windows of the fuselage to be increased. And since the bending stresses of the tail cone of the fuselage are reduced due to the fact that they absorb it and divert it to the rest of the structure, through the joint of the rudder(s) and rear wings, it enables there to be a cargo door which can be opened in flight, if desired. Furthermore, since the wings make up a joined and independent group, it enables a fuselage-container or passenger cabin system to be made in order to be able to quickly join it to the fuselage or fuselages, without altering the transport vehicle of said cargo.

Furthermore, the fact that the vehicle can perform vertical take-off manoeuvres like a helicopter or an aircraft enables flexibility for indistinctly installing different systems of gears, legs, etc.

As can be deduced, these embodiments can be carried out in a unique or isolated manner, or by combining several or all of them.

## Claims

1. An assembly of three composite wings for aerial, water, land or space vehicles **characterised in that** it is made up of:
- front composite wings,
- central composite wings and
- rear composite wings,
wherein said front composite wings are located in the lower and front position of the fuselage or fuselages of the vehicle, moving backwards and upwards,
wherein said front composite wings are joined in the external area thereof with said central composite wings and said rear composite wings,
wherein said front composite wings are swept and have a positive dihedral and are formed with power plants (1) therein, tilting planes (2), elevators-ailerons and high-lift devices (3), in order to join said central and rear composite wings,
wherein said central composite wings are located in the upper area of the fuselage or fuselages of said vehicle, and wherein the dihedral varies, such that it is positive, zero or negative, wherein said variation is performed in a fixed manner in the design of the vehicle or prior to the operation of the vehicle,
wherein in said central composite wings the sweeping thereof varies, i.e. that it is backward-swept and/or forward-swept, wherein said variation can be fixed, i.e. in the design of the vehicle, or it is adjusted prior to the operation of the vehicle, and/or dynamic, i.e. it is changed in one direction or another during the operation of the vehicle,
wherein said central composite wings are joined in the external area thereof with said rear composite wings and said front composite wings,
wherein said central composite wings are formed with power plants (11) therein, tilting planes (12), elevators-ailerons and high-lift devices (4), and wingtips (5),
wherein said rear wings are located in the upper and rear position of the fuselage or fuselages and rudder or rudders (7) of said vehicle, moving forwards and downwards,
wherein said rear wings are joined in the external area thereof with said front wings and said central composite wings,
wherein said swept rear composite wings with a negative dihedral are formed with a system of power plants (6) therein and in the joint with the rudder or rudders (7), tilting planes (8), elevators-ailerons and high-lift devices (9), in order to be joined with the central and rear composite wings.

2. The assembly of three composite wings for aerial, water, land or space vehicles according to claim 1, **characterised in that** said assemblies of three composite wings, front, central and rear, are joined with each other or with marginal plates, **in that** the curvature or bending of the wings is used in the case of the front and rear composite wings in order to be joined with the central composite wings; and wherein the assembly of three composite wings varies the tapering and/or elongation thereof or not.

3. The assembly of three composite wings for aerial, water, land or space vehicles according to claim 1, **characterised in that** said front and rear composite wings, on the ends thereof, are straight or approximately form an ellipse or a circle seen from the elevation view of said wings.

4. The assembly of three composite wings for aerial, water, land or space vehicles according to claim 1, **characterised in that** the wingspan of the central composite wings is larger than the wingspan of the other two wings, either in a fixed manner, i.e. in the design, or in such a manner that they can be disassembled and assembled prior to the operation of the vehicle or dynamically, wherein said wingspan is extended or retracted during vehicle operation.

5. The assembly of three composite wings for aerial, water, land or space vehicles according to claim 4, **characterised in that** said wingspan extension consists of:
- tips on said extended composite wings such as winglets, plates, etc.,
- on the extended central composite wings, high-lift elements on the leading edges thereof, and/or
- on the extended central composite wings, elevator-aileron elements on the trailing edges thereof.

6. The assembly of three composite wings for aerial, water, land or space vehicles according to claim 1, **characterised in that** said power plant system in at least one of the three composite wings, central, front or rear, in the joint with the rudder or rudders (7), is tilting wherein it either tilts on the same plane as the wing containing it, or it tilts with the same plane of the wing or portion of the plane containing it.

7. The assembly of three composite wings for aerial, water, land or space vehicles according to claim 1, **characterised in that** at least one of the composite wings incorporates a solar energy system for supplying energy to the vehicle.

8. The assembly of three composite wings for aerial, water, land or space vehicles according to claim 1, **characterised in that** said assembly of three composite wings is constructed containing one or more of the following materials: aluminium, steel, wood, fabric, acrylic, composite materials or graphene.

9. The assembly of three composite wings for aerial, water, land or space vehicles according to claim 1, **characterised in that** said fuselage or fuselages or structure of said vehicle incorporates one or more doors, windows, containers, or passenger and/or cargo cabin.

10. The assembly of three composite wings for aerial, water, land or space vehicles according to claim 1, **characterised in that** said set of three wings or the fuselage or fuselages of the vehicle incorporates a landing gear, legs, skates or skis, floats or another type of support for the vehicle when it is on the surface.
